## Europäisches Patentamt

## European Patent Office

## Office européen des brevets

(19)

(11) Publication number: **0 115 919**
**B1**

(12) # EUROPEAN PATENT SPECIFICATION

(45) Date of publication of the patent specification:
**05.11.86**

(51) Int. Cl.⁴: **B 60 R 22/18**

(21) Application number: **84300286.6**

(22) Date of filling: **18.01.84**

(54) Safety belt emergency locking retractor.

(30) Priority: **03.02.83 GB 8302936**

(43) Date of publication of application:
**15.08.84 Bulletin 84/33**

(45) Publication of the grant of the patent:
**05.11.86 Bulletin 86/45**

(84) Designated Contracting States:
**DE FR GB IT**

(56) References cited:
**WO-A-82/04021**
**DE-A-2 629 220**
**DE-A-2 850 744**
**US-A-4 008 863**

(73) Proprietor: **BRITAX- KOLB GMBH & CO,**
**Waldstrasse 2, D-8065 Erdweg (DE)**

(72) Inventor: **Tauber, Erhard, Simrockstrasse 54, D-8000**
**München 50 (DE)**

(74) Representative: **Hollinghurst, Antony, Britax**
**Limited Patent Department Kingsham Road,**
**Chichester West Sussex PO19 2UG (GB)**

EP 0 115 919 B1

LIBER, STOCKHOLM 1986

## Description

This invention relates to a retractor for a vehicle safety belt having a spool which comprises a cylindrical core conteining a slot extending parallel to its axle and having means for retaining an end of the belt in said slot, and a plastics cover for said core having a slot coincident with the slot in the core and a spiral outer surface with a minimum radius on one side of the slot and a maximum radium on the other side of the slot. A retractor of this type is disclosed in patent specification US-A-4 008 863.

The invention aims to provide a retractor of this type in which the cover can easily be assembled on to the core.

According to the invention, in a retractor of this type, the plastics cover is formed in two parts arranged to abut one another along a diametrical plane, each part having a plurality of inwardly projecting lugs positioned asymmetrically with respect to the core and arranged to engage in complementary holes in the core.

When the slot in the core extends diametrically thereacross, the cover preferably has a second slot coincident with the second end of the slot in the core and a flap hinged thereto for closing said second slot, the outer surface of the flap being coincident with said spiral surface.

Radially extending vanes may be provided on the outer end faces of the spool to create an outward flow of air as the spool rotates.

An embodiment of the invention will now be described, by way of example, with reference to the accompanying drawings, in which:

Figure 1 is a partially broken away elevational view of a safety belt retractor having a spool in accordance with the invention;

Figure 2 is a cross-sectional view, taken on the line 2 - 2 in Figure 1 of the spool only;

Figure 3 is a cross-sectional view, taken on the centre line, of the plastics cover of the spool shown in Figures 1 and 2, prior to assembly;

Figure 5 is a scrap elevational view of the radially outer part of the outwardly facing end face of the plastics cover; and

Figure 6 is a cross-sectional view taken on the line 6 - 6 in Figure 5.

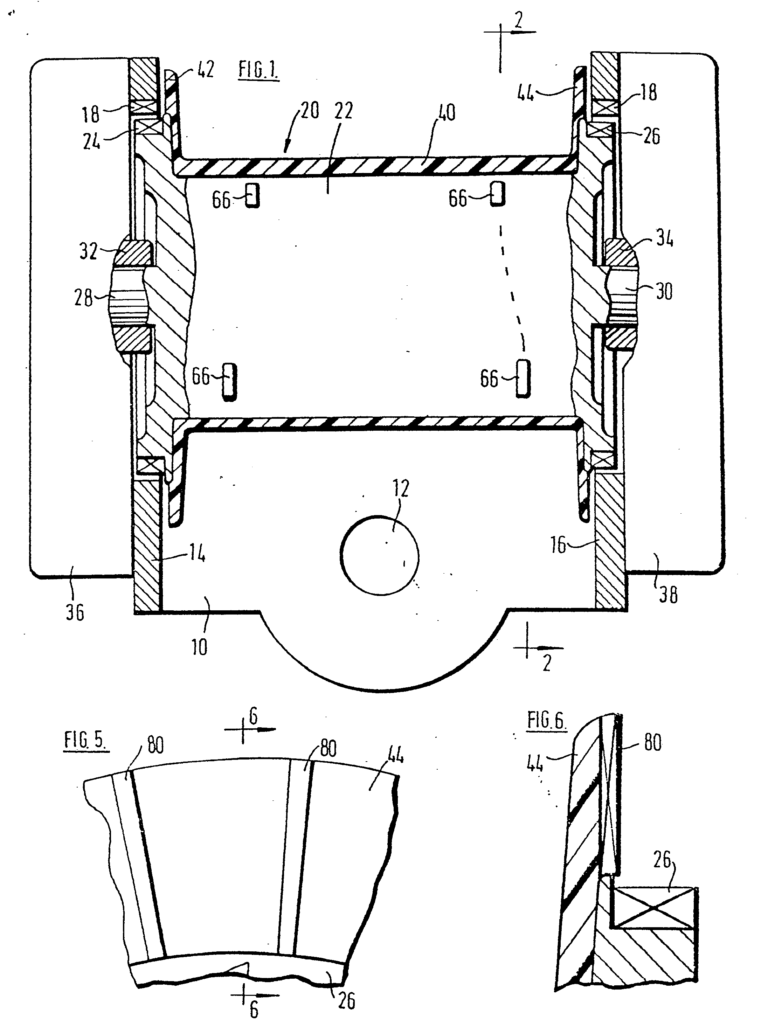

Figure 1 illustrates a retractor of the type described in Patent Specification No. WO 82/04021 and in GB Patent Applications Nos. 8233186 and 8233187. The retractor has a generally U-shaped frame 10, the base portion of which is provided with a hole 12 whereby the frame 10 may be secured to the body of a motor vehicle. The side limbs 14 and 16 of the U-shape each contain a generally circular aperture having a respective toothed segment 18 forming part of its upper periphery.

A spool 20 is mounted in the frame 10. The spool 20 has a central cylindrical core 22 with respective toothed flanges 24 and 26 and stub axles 28 and 30 on its ends. The stub axles 28 and 30 are journaled in sliding bearings 32 and 34 which allows the spool 20 to move in a generally vertical direction so as to bring the toothed flanges 24 and 26 into engagement with the toothed segments 18 when the retractor is required to lock. The sensing mechanism to actuate such locking is housed in a cassette 36 secured to the limb 14 while a retraction spring is housed in a cassette 38 secured to the other limb 16.

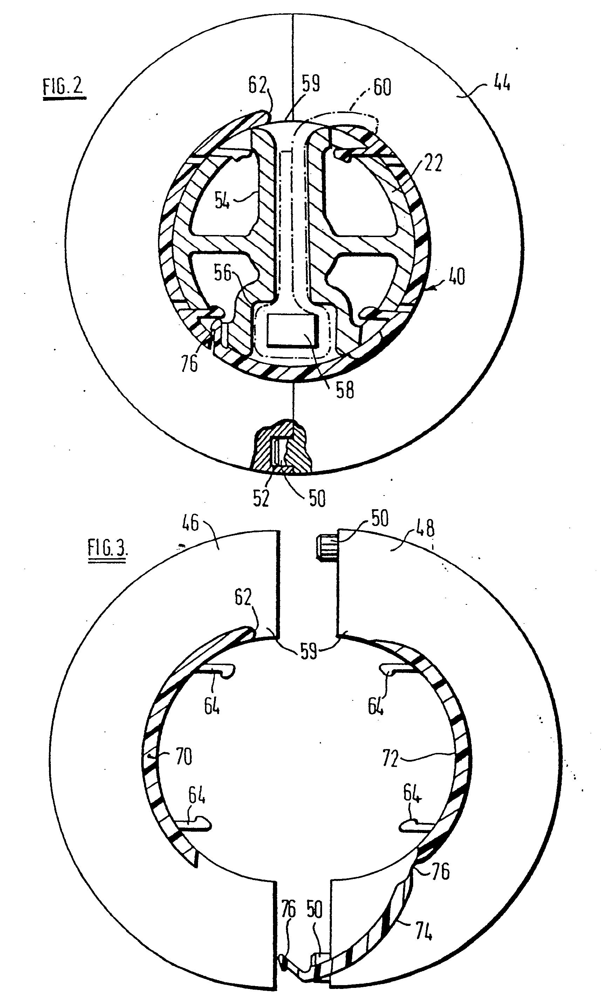

In accordance with the invention, the cylindrical core 22 is enclosed in a plastics cover 40 having flanges 42 and 44 which project radially beyond the toothed flanges 24 and 26 of the core 22. Turning to Figures 2 and 3, the cover 40 is formed in two parts 46 and 48 which are joined together along a diametrical plane by dowels 50 which project from the flanges of the part 46 into complementary holes 52 in the flanges of the part 46.

As can be seen from Figure 2, the core 22 has a central diametrically extending slot 54 with one end 56 enlarged to accommodate a locking bar 58 which extends through a loop in the end of the safety belt 60 (shown in chain-dotted lines). The cover 40 has a corresponding slot 59 aligned with the narrow end of the slot 54 in the core 22. The outer surface of the cover 40 is spiral in cross-section, the pitch of the spiral being equal to the thickness of the safety belt 60 and the cover 40 having maximum thickness at the left-hand edge 62 if the slot 59. Consequently, if the safety belt 60 is wrapped around the cover 40 in the clockwise direction (as viewed in Figure 2), each successive turn of the webbing lies smoothly on top of the previous turn with no bump or other discontinuity adjacent to the point at which it emerges from the slot 54.

The two halves 46 and 48 of the cover 44 are held on to the core 22 by lugs 64 which engage in slots 66 in the cylindrical part 22 of the core 20. The slots 66 are unsymmetrically disposed relative to one another so as to inhibit incorrect assembly of the cover 40 on the core 22.

In order to permit insertion of the locking bar 58, the spiral part 70 of the portion 46 is cut away opposite the enlarged end 56 of the slot 54. The spiral part 72 of the portion 48 has a flap 74 hinged thereto at 76 so as to be movable into a position (as illustrated in Figure 2) in which it covers the enlarged end 56 of the slot 54 and presents a smooth spiral surface with the two spiral parts 70 and 72. A lug 76 on the outer end of the flap 74 engages with the edge of the part 70 to maintain the flap 74 in its closed position after assembly is complete.

Turning now to Figures 5 and 6, the part of the flange 44 which projects beyond the toothed flange 26 has a set of radial vanes 80 on its outwardly facing end surface. Similar radial vanes are provided on the flange 42. The effect of these vanes is to produce an outward current of air when the spool rotates, thus tending to eject any dust which may collect between the ends of the spool and the side limbs 14 and 16 of the frame 10 before such dust can percolate into the cassettes 36 and 38.

## Claims

1. A spool for a retractor for a vehicle safety belt (60) comprising a cylindrical core (22) containing a slot (54) extending parallel to its axis and having means (58) for retaining an end of the belt (60) in said slot, and a plastics cover (40) for said core having a slot (59) coincident with the slot (58) in the core (22) and a spiral outer surface with a minimum radius on one side of the slot (59) and a maximum radius on the other side of the slot (59), characterised in that the plastics cover (40) is formed in two parts (46 and 48) arranged to abut one another along a diametrical plane, each part having a plurality of inwardly projecting lugs (64) positioned asymmetrically with respect to the core (22) and arranged to engage in complementary holes (66) in the core.

2. A spool according to claim 1, 2 or 3, characterised in that the slot (54) in the core (22) extends diametrically thereacross and the cover (40) has a second slot coincident with the second end of the slot in the core and a flap (74) hinged thereto for closing said second slot, the outer surface of the flap being coincident with said spiral surface.

3. A spool according to any preceding claim, characterised by radially extending vanes (80) on the outer end faces (42, 44) of the spool.

## Patentansprüche

1. Spule für einen Aufroller für einen Fahrzeugsicherheitsgurt (60) mit einem zylindrischen Kern (22), der einen parallel zur Kernachse verlaufenden Schlitz (54) enthält und Mittel (58) zum Halten eines Endes des Gurtes (60) im Schlitz aufweist, und mit einer Kunststoffabdeckung (40) für den Kern mit einem Schlitz (59), der mit dem im Kern (22) befindlichen Schlitz (58) zusammenfällt, und mit einer spiralförmigen Außenfläche, die an einer Seite des Schlitzes (59) einen minimalen Radius und an der anderen Seite des Schlitzes (59) einen maximalen Radius hat, dadurch gekennzeichnet, daß die Kunststoff-Abdeckung (40) in zwei Teilen (46, 48) ausgebildet ist, wobei diese Teile so angeordnet sind, daß sie entlang einer diametralen Ebene aneinanderliegen, wobei jedes Teil eine Vielzahl von nach innen vorstehenden Nasen (64) aufweist, die hinsichtlich des Kerns (22) positioniert so angeordnet sind, daß sie in komplementäre Löcher (66) des Kerns eingreifen.

2. Spule nach Anspruch 1, 2 oder 3, dadurch gekennzeichnet, daß der Schlitz (54) im Kern (22) diametral durch diesen verläuft und daß die Abdeckung (40) einen zweiten Schlitz aufweist, der mit dem zweiten Ende des im Kern befindlichen Schlitzes zusammenfällt, und daß an der Abdeckung (40) eine Klappe (74) angelenkt ist, um den zweiten Schlitz zu schließen, wobei die Außenfläche der Klappe der spiralförmigen Oberfläche zusammenfällt.

3. Spule nach einem der vorhergehenden Ansprüche, gekennzeichnet durch radial verlaufende Rippen (80) an den äußeren Endflächen (42, 44) der Spule.

## Revendications

1. Une bobine pour un rétracteur de ceinture de sécurité de véhicule (60) comprenant un noyau cylindrique (22) comportant une fente (54) s'étendant parallèlement à son axe et ayant des moyens (58) pour retenir une extrémité de la ceinture (60) dans ladite fente, et un cache en matière plastique (40) pour ledit noyau ayant une fente (59) qui coïncide avec la fente (58) ménagée dans le noyau (22) et une surface en spirale extérieure avec un rayon minimal sur un des côtés de la fente (59) et un rayon maximal sur l'autre côté de la fente (59), caractérisée en ce que le cache en matière plastique (40) est formé en deux parties (46 et 48) disposées de manière à buter l'une contre l'autre selon un plan diamétralement opposé, chaque partie ayant une pluralité d'ergots (64) faisant saillie vers l'intérieur, disposés de façon asymétrique par rapport au noyau (22) et disposés de manière à venir s'engager dans des orifices complémentaires (66) ménagés dans le noyau.

2. Une bobine selon la revendications 1 caractérisée en ce que la fente (54) ménagée dans.le noyau (22) s'étend diamétralement à travers celui-ci et le cache (40) présente une seconde fente qui coïncide avec la seconde extrémité de la fente ménagée dans le noyau et un rabat (74) articulé sur celui-ci de manière à fermer ladite seconde fente, la surface extérieure du rabat coïncidant avec ladite surface en spirale.

3. Une bobine selon l'une quelconque des revendications précédentes, caractérisée en ce que des pales (80) s'étendant radialement, sont ménagées sur les faces d'extrémité extérieures (42, 44) de la bobine.

0 115 919

FIG.1.

FIG.5.

FIG.6.

1

FIG.2

FIG.3.